# EUROPEAN PATENT APPLICATION

(11) **EP 4 708 777 A1**
(43) Date of publication of application: **11.03.2026**
(21) Application number: 25199506.4
(22) Date of filing: 02.09.2025
(51) Int. Cl.: H04L 12/10

(54) **DEVICE WITH POWER OVER ETHERNET FUNCTIONALITY AND POWER SUPPLY CONTROL METHOD THEREOF**

(30) Priority: 04.09.2024 TW 113133561
(71) Applicant: Connection Technology Systems Inc., New Taipei City 221432 (TW)
(72) Inventor: CHEN, Yu-Hsin, 221432 New Taipei City (TW); WANG, Yu-Cheng, 221432 New Taipei City (TW)
(74) Representative: Hoefer & Partner Patentanwälte mbB

(57) **Abstract**

A device (100) with a PoE function and a power supply control method thereof are provided. The device (100) includes a signal processing module (120), a PoE control module (130), and a main controller (140). The PoE control module (130) is configured to determine whether to enable the PoE function based on a PoE control signal (Spc). When the PoE control module (130) receives an enabled PoE control signal (Spc), the PoE function is enabled to generate a DC power supply (Pdc) which is applied to the second electrical signal (Spd_1, Spd_2, ...,Spd_n). The main controller (140) outputs the PoE control signal (Spc) to control an operation of the PoE control module (130) based on a first status signal indicating a connection state of an optical signal (Sopt) and a second status signal indicating a signal intensity of the optical signal (Sopt). When the main controller (140) receives the first and the second status signals being enabled, the main controller (140) generates the enabled PoE control signal (Spc) to enable the PoE function.

## Description

### BACKGROUND

### Technical Field

The present disclosure relates to signal switching devices and control methods thereof, particularly to a device with a Power over Ethernet function and a power supply control method thereof.

### Related Art

In existing network infrastructure, a Power over Ethernet (PoE) technology has been widely applied to simultaneously transmit data and power through Ethernet cables to support terminal equipment such as IP cameras, wireless base stations, and network phones, so that the terminal equipment have better location selection flexibility in deployment.

However, existing PoE systems have several potential problems. For example, in general systems with PoE function, core network devices that provide power through Ethernet cables will continuously supply power to Ethernet ports connected to the terminal equipment in the startup state, i.e. the PoE function is enabled by default. Under this condition, even if the core network device cannot normally transmit data to the backend terminal equipment, it still will not stop providing power to the terminal equipment through Ethernet ports. At this time, users of the terminal equipment may observe device fault status, but cannot confirm what the fault cause is.

For fault troubleshooting, the fault status of the terminal equipment may be caused by problems at different nodes in the system. For example, it may be the terminal equipment or the core network device itself fault, frontend fiber optic cable of the core network device not properly connected or disconnected, or photoelectric conversion module specification settings of the core network device not matching, etc. System suppliers need to troubleshoot and confirm one by one, consuming manpower and time costs.

In addition, in traditional PoE control mechanisms, since core network devices still continuously supply power to the terminal equipment when faults occur in terminal equipment, this also has adverse effects on energy saving considerations for the overall system.

### SUMMARY

**The** present disclosure proposes a device with a PoE function and a power supply control method therefore, which can solve the problems mentioned in the related art.

Embodiments of the present disclosure provide a device with the PoE function, adapted to convert a first electrical signal related to an optical signal into a second electrical signal with Ethernet data transmission, and provide the second electrical signal to a corresponding terminal equipment through at least one Ethernet port. **The** device includes a signal processing module, a PoE control module, and a main controller. **The** signal processing module is configured to receive the first electrical signal and convert the first electrical signal into the second electrical signal. **The** PoE control module is configured to determine whether to enable the PoE function according to a PoE control signal, wherein when the PoE control module receives an enabled PoE control signal, the PoE control module enables the PoE function and generates a DC power supply applied to the second electrical signal, so that the second electrical signal with dc power supply is provided to the corresponding Ethernet port, and when the PoE control module receives a disabled PoE control signal, the PoE control module disables the PoE function and stops generating the DC power supply. **The** main controller is electrically connected to the signal processing module and the PoE control module, and configured to output the corresponding PoE control signal to control an operation of the PoE control module according to a first state signal indicating a connection status of the optical signal and a second state signal indicating a signal intensity of the optical signal. When the first state signal and the second state signal received by the main controller are both enabled, the main controller generates the enabled PoE control signal to enable the PoE function.

Embodiments of the present disclosure provide a device with PoE function, which includes a photoelectric conversion module, a signal processing module, a PoE control module, and a main controller. **The** photoelectric conversion module is configured to receive an optical signal and convert the optical signal into a first electrical signal, wherein the photoelectric conversion module generates a first state signal according to whether the optical signal is lost. **The** signal processing module is electrically connected to the photoelectric conversion module, and configured to receive the first electrical signal and convert the first electrical signal into a second electrical signal with Ethernet data transmission, wherein the signal processing module determines whether to successfully establish a connection with the photoelectric conversion module and generates a second state signal accordingly. **The** PoE control module is configured to determine whether to enable the PoE function according to a PoE control signal, wherein when the PoE control module receives an enabled PoE control signal, the PoE control module enables the PoE function and generates a DC power supply applied to the second electrical signal, so that the second electrical signal with the DC power supply is provided to the corresponding Ethernet port, and when the PoE control module receives a disabled PoE control signal, the PoE control module disables the PoE function and stops generating the DC power supply. The main controller is electrically connected to the photoelectric conversion module, the signal processing module, and the PoE control module, and configured to output a corresponding PoE control signal to control an operation of the PoE control module according to the first state signal and the second state signal. When any one of the first state signal and the second state signal received by the main controller is disabled, the main controller generates a disabled PoE control signal to disable the PoE function.

A power supply control method for a device with a PoE function, including the following steps: receiving an optical signal and converting the optical signal into a first electrical signal with a photoelectric conversion module; receiving the first electrical signal and converting the first electrical signal into a second electrical signal with Ethernet data transmission with a signal processing module; determining whether the optical signal is lost ,and generating a first state signal accordingly; determining whether the signal processing module successfully establishes a connection with the photoelectric conversion module and generating a second state signal accordingly; determining whether a difference between a signal intensity of the optical signal and a receive sensitivity of the photoelectric conversion module is greater than or equal to 1 dBm, and generating a third state signal accordingly; and determining whether to enable the PoE function according to the first to third state signals, wherein when the PoE function is enabled, the DC power supply is generated and applied to the second electrical signal.

### BRIEF DESCRIPTION OF THE DRAWINGS

In order to more clearly explain the implementation methods of the present disclosure or the technical solutions in the related art, the following will briefly introduce the drawings required for use in the description of the implementation methods or related arts. Obviously, the drawings in the following description are only some implementation methods of the present disclosure. For those with ordinary knowledge in the field, other drawings can also be obtained based on these drawings without creative labor;
FIG. 1 is a system schematic diagram of a device with a PoE function and its application according to some embodiments of the present disclosure.
FIG. 2A and FIG. 2B are flowcharts of a power supply control method for a device with a PoE function according to different embodiments of the present disclosure.
FIG. 3 is a specific flowchart of a power supply control method according to some embodiments of FIG. 2B.

### DESCRIPTION OF THE EMBODIMENTS

The present disclosure will now be described in the following embodiments with reference to the drawings. The following descriptions of various implementations are presented herein for purpose of illustration and giving examples only. This invention is not intended to be exhaustive or to be limited to the precise form disclosed. These example embodiments are just that - examples - and many implementations and variations are possible that do not require the details provided herein. It should also be emphasized that the disclosure provides details of alternative examples, but such listing of alternatives is not exhaustive. Furthermore, any consistency of detail between various examples should not be interpreted as requiring such detail - it is impracticable to list every possible variation for every feature described herein. The language of the claims should be referenced in determining the requirements of the invention.

In the drawings, the size and relative sizes of components may be exaggerated for clarity. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. As used herein, the term "and/or" includes any and all combinations of one or more of the associated listed items and may be abbreviated as "/".

It will be understood that, although the terms first, second, third etc. may be used herein to describe various elements, components, regions, layers, or steps, these elements, components, regions, layers, and/or steps should not be limited by these terms. Unless the context indicates otherwise, these terms are only used to distinguish one element, component, region, layer, or step from another element, component, region, or step, for example as a naming convention. Thus, a first element, component, region, layer, or step discussed below in one section of the specification could be termed a second element, component, region, layer, or step in another section of the specification or in the claims without departing from the teachings of the present invention. In addition, in certain cases, even if a term is not described using "first," "second," etc., in the specification, it may still be referred to as "first" or "second" in a claim in order to distinguish different claimed elements from each other.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

It will be understood that when an element is referred to as being "connected" or "coupled" to or "on" another element, it can be directly connected or coupled to or on the other element or intervening elements may be present. In contrast, when an element is referred to as being "directly connected" or "directly coupled," or "immediately connected" or "immediately coupled" to another element, there are no intervening elements present. Other words used to describe the relationship between elements should be interpreted in a like fashion (e.g., "between" versus "directly between," "adjacent" versus "directly adjacent," etc.). However, the term "contact," as used herein refers to a direct connection (i.e., touching) unless the context indicates otherwise.

Embodiments described herein will be described referring to plan views and/or cross-sectional views by way of ideal schematic views. Accordingly, the exemplary views may be modified depending on manufacturing technologies and/or tolerances. Therefore, the disclosed embodiments are not limited to those shown in the views, but include modifications in configuration formed on the basis of manufacturing processes. Therefore, regions exemplified in figures may have schematic properties, and shapes of regions shown in figures may exemplify specific shapes of regions of elements to which aspects of the invention are not limited.

Spatially relative terms, such as "beneath," "below," "lower," "above," "upper" and the like, may be used herein for ease of description to describe one element's or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. **The** device may be otherwise oriented (rotated 90 degrees or at other orientations) and the spatially relative descriptors used herein interpreted accordingly.

Terms such as "same," "equal," "planar," or "coplanar," as used herein when referring to orientation, layout, location, shapes, sizes, amounts, or other measures do not necessarily mean an exactly identical orientation, layout, location, shape, size, amount, or other measure, but are intended to encompass nearly identical orientation, layout, location, shapes, sizes, amounts, or other measures within acceptable variations that may occur, for example, due to manufacturing processes. The term "substantially" may be used herein to emphasize this meaning, unless the context or other statements indicate otherwise. For example, items described as "substantially the same," "substantially equal," or "substantially planar," may be exactly the same, equal, or planar, or may be the same, equal, or planar within acceptable variations that may occur, for example, due to manufacturing processes.

Terms such as "about" or "approximately" may reflect sizes, orientations, or layouts that vary only in a small relative manner, and/or in a way that does not significantly alter the operation, functionality, or structure of certain elements. For example, a range from "about 0.1 to about 1" may encompass a range such as a 0%-5% deviation around 0.1 and a 0% to 5% deviation around 1, especially if such deviation maintains the same effect as the listed range.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

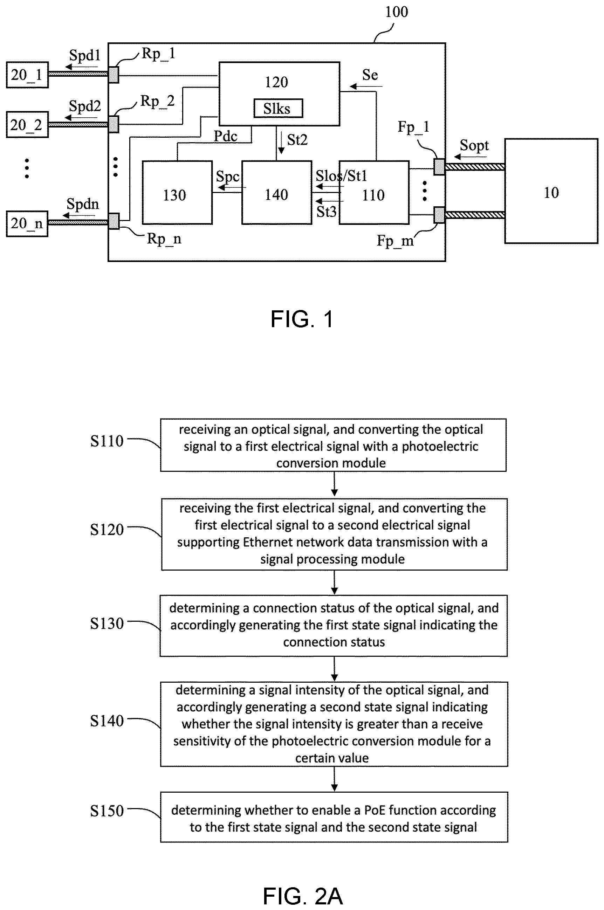

FIG. 1 is a system schematic diagram of a device with a Power over Ethernet (hereinafter referred to as "PoE") function and its application according to some embodiments of the application. The device 100 with the PoE function in the present embodiment may be, for example, a PoE switch, a PoE router, or a PoE media converter, etc. FIG. 1 illustrates an example of a fiber optic-Ethernet PoE media converter (hereinafter referred to as "media converter 100"), but the application is not limited thereto.

Referring to FIG. 1, in the network system architecture with the media converter 100, the media converter 100 has fiber optic connection ports Fp_1~Fp_m and Ethernet connection ports Rp_1~Rp_n. The media converter 100 may be electrically connected to a fiber optic network equipment 10 through the fiber optic connection ports Fp_1~Fp_m, and may be electrically connected to the terminal equipment 20_1~20_n through the Ethernet connection ports Rp_1~Rp_n, where m and n ≥1, and are natural numbers. That is, the media converter 100 may have the one or more fiber optic connection ports Fp_1~Fp_m and the Ethernet connection ports Rp_1~Rp_n, and the quantities of m and n may be the same or different.

The fiber optic network equipment 10 may be, for example, a fiber optic switch, a fiber optic router, an Optical Network Terminal (ONT), or a fiber optic infrastructure of a network operator. The terminal equipment 20_1~20_n may be, for example, IP cameras, wireless base stations, network phones, etc. The application is not limited thereto.

The media converter 100 may be configured to convert optical signals received from fiber optic connection ports Fp_1~Fp_m into electrical signals Spd1-Spdn supporting Ethernet data transmission, and transmit the electrical signals Spd1-Spdn to the corresponding terminal equipment 20_1~20_n through the Ethernet connection ports Rp_1~Rp_n. In addition to signal conversion and switching, the media converter 100 will generate a DC power supply (for example, 48V~57V power supply) applied to the electrical signals Spd1-Spdn when the PoE function is enabled, so that the electrical signals Spd1-Spdn with DC power supply are transmitted to the terminal equipment 20_1~20_n through the Ethernet connection ports Rp_1~Rp_n and supply power to terminal equipment 20_1~20_n.

In some embodiments, from the perspective of power supply, the media converter 100 may be electrically connected to a local physical power supply (not shown), and generate a DC power supply required for PoE function based on the power provided by the power supply. Therefore, in the system of the present embodiment, the media converter 100 may be regarded as Power Sourcing Equipment (PSE) and the terminal equipment 20_1~20_n may be regarded as Powered Device (PD).

The media converter 100 of the present embodiment includes a photoelectric conversion module 110, a signal processing module 120, a PoE control module 130, and a main controller 140. The photoelectric conversion module 110 is electrically connected to the fiber optic network equipment 10 through the fiber optic connection ports Fp_1~Fp_m and the fiber optic cables. The signal processing module 120 is electrically connected to terminal equipment 20_1~20_n through the Ethernet connection ports Rp_1~Rp_n and the Ethernet cables, and one end is electrically connected to the photoelectric conversion module 110. The PoE control module 130 has one end electrically connected to the signal processing module 120 and another end electrically connected to the main controller 140. The main controller 140 is electrically connected to photoelectric conversion module 110, the signal processing module 120, and the PoE control module 130.

Specifically, taking m and n both equal to 1 as an example for explanation (but the application is not limited thereto), the photoelectric conversion module 110 is configured to receive an optical signal Sopt from the fiber optic connection port Fp_1, and convert the optical signal Sopt into an electrical signal Se, wherein the photoelectric conversion module 110 may be, for example, one or more Small Form-factor Pluggable fiber optic modules (or called SFP modules), but the application is not limited thereto.

In the present embodiment, the photoelectric conversion module 110 will also generate a corresponding indicator signal Slos based on whether the optical signal Sopt is lost. When the photoelectric conversion module 110 determines that the optical signal Sopt is lost, the photoelectric conversion module 110 will generate a disable indicator signal Slos (for example, a high logic level/1 signal) to indicate that the optical signal Sopt is lost; conversely, when the photoelectric conversion module 110 determines that the optical signal Sopt is not lost, the photoelectric conversion module 110 will generate an enable indicator signal Slos (for example, a low logic level/0 signal) to indicate that optical signal Sopt is normally received.

The signal processing module 120 is configured to receive the electrical signal Se transmitted by the photoelectric conversion module 110, and convert the electrical signal Se into the electrical signal Spd1 that supports Ethernet network data transmission, wherein the signal processing module 120 may be, for example, an Ethernet Switch Controller or a large-scale integrated circuit with the same/similar function, but the application is not limited thereto.

In the present embodiment, the signal processing module 120 may determine whether to successfully establish a connection with the photoelectric conversion module 110 based on the received electrical signal Se, and generate a corresponding indicator signal Slks accordingly. When the signal processing module 120 determines that the connection with the photoelectric conversion module 110 is successfully established, the signal processing module 120 will generate an enable indicator signal Slks (for example, a high logic level/1 signal); conversely, when the signal processing module 120 determines that the connection establishment with the photoelectric conversion module 110 has failed or is still in connection, the signal processing module 120 will generate a disable indicator signal Slks (for example, a low logic level/0 signal).

The PoE control module 130 is configured to determine whether to enable the PoE function based on the PoE control signal Spc received from the main controller 140. When the PoE control module 130 receives an enable PoE control signal (for example, a high logic level/1 signal), the PoE control module 130 enables the PoE function and generates the DC power supply Pdc to apply to the electrical signal Spd1. Conversely, when the PoE control module 130 receives a disable PoE control signal (for example, a low logic level/0 signal), the PoE control module 130 disables the PoE function and stops generating the DC power supply Pdc.

The main controller 140 serves as the control core of the media converter 100 to control the operation of the signal processing module 120 and the PoE control module 130, wherein the main controller 140 will determine whether to output an enable PoE control signal Spc based on the status/signal characteristics of the optical signal Sopt received by the media converter 100, thereby controlling whether to enable the PoE function, and further supplying power to the terminal equipment 20_1 only under circumstances that ensure the normal system operation, avoiding power waste. In other words, compared to traditional PoE control mechanisms that continuously supply power regardless of whether terminal equipment fails, the media converter 100 and its power supply control method of the embodiments of the application can effectively make the overall system operation more energy-efficient.

In some embodiments, the main controller 140 may simultaneously base on multiple state signals as the basis for determining whether to output an enable PoE control signal Spc. For example, the main controller 140 may respectively use the indicator signal Slos indicating whether the optical signal Sopt is lost and the indicator signal Slks indicating whether the signal conversion module 120 successfully establishes the connection with the photoelectric conversion module 110 as the first state signal St1 and the second state signal St2, wherein the main controller 140 may output an enable PoE control signal Spc to enable the PoE function only when the first state signal St1 and the second state signal St2 are simultaneously enabled, i.e. the indicator signal Slos indicates the optical signal Sopt is not lost, and the indicator signal Slks indicates the connection establishment is successful. In other words, in this exemplary embodiment, as long as any one of the first state signal St1 and the second state signal St2 indicating the connection status of the optical signal Sopt is disabled, the PoE function will be disabled.

Through this determination mechanism, the media converter 100 will only supply power to the downstream terminal equipment 20_1-20_n under the premise that the fiber optic cable is correctly connected/not unplugged, and the photoelectric conversion module 110 and the signal conversion module 120 specifications are matched. Under this determination mechanism, even if the fiber optic cable is correctly connected, as long as the photoelectric conversion module 110 specification is mismatched, it will also cause the media converter 100 to stop supplying power to the terminal equipment 20_1~20_n.

If based solely on the indicator signal Slos as the enable determination for the PoE function, in the situation where the fiber optic cable is correctly connected but the photoelectric conversion module 110 specification is mismatched, the media converter 100 will still supply power to the terminal equipment 20_1~20_n. As such, for terminal users or maintenance personnel, they can only observe that the terminal equipment is activated but cannot operate normally, therefore must troubleshoot fault causes one by one at each node in the system. In comparison, through the determination mechanism of the above exemplary embodiment, in the situation where the photoelectric conversion module 110 specification is mismatched, the media converter 100 will directly stop power supply, therefore for terminal users or maintenance personnel, they can directly limit the inspection scope first to components related to the PoE function, for example troubleshooting the media converter 100 operation/power condition, the fiber optic cable connection condition, and the photoelectric conversion module 110 specification, which can eliminate most problems and helps improve fault troubleshooting and maintenance efficiency.

In some embodiments, the main controller 140 may further base on third state signal St3 indicating the signal intensity of the optical signal Sopt received by the photoelectric conversion module 110 as the basis for determining whether to output an enable PoE control signal Spc.

More specifically, the third state signal St3 may indicate whether the signal intensity of optical signal Sopt is greater than a receive sensitivity of the photoelectric conversion module 110, wherein if the signal intensity of the optical signal Sopt is greater than the receive sensitivity for a certain value, the third state signal St3 will be enabled; conversely, if the signal intensity of the optical signal Sopt is not greater than the receive sensitivity for the certain value, then the third state signal St3 will be disabled. In some embodiments, the certain value may for example be 1dBm, i.e. the third state signal St3 will be enabled when the signal intensity of the optical signal Sopt is greater than or equal to the receive sensitivity for 1dBm, but the application is not limited thereto.

In the exemplary embodiment, the main controller 140 may output an enable PoE control signal Spc to enable the PoE function only when the first state signal St1, the second state signal St2, and the third state signal St3 are all enabled, i.e. the indicator signal Slos indicates the optical signal Sopt is not lost, and the indicator signal Slks indicates the connection establishment is successful. In other words, in the exemplary embodiment, as long as any one of the first state signal St1 and the second state signal St2 indicating the connection status of the optical signal Sopt, and the third state signal St3 indicating the signal intensity of the optical signal Sopt is disabled, the PoE function will be disabled.

Through this determination mechanism, the media converter 100 will only supply power to the backend terminal equipment 20_1~20_n under the premise that the fiber optic cable is correctly connected/not unplugged, the photoelectric conversion module 110 and the signal conversion module 120 specifications match, and the signal intensity of optical signal Sopt is higher than the receive sensitivity of the photoelectric conversion module 110. Under this determination mechanism, even if the fiber optic cable is correctly connected and the photoelectric conversion module 110 specifications match, as long as specification parameters of the photoelectric conversion module 110 (such as optical wavelength) are not set correctly, the media converter 100 will also stop supplying power to the terminal equipment 20_1~20_n.

Similar to the advantages of the previous exemplary embodiment, this exemplary embodiment further adds the optical signal intensity as a basis for the PoE enable determination, which may further improve determination accuracy and reliability on the previous foundation. More specifically, in the determination mechanism of the previous exemplary embodiment, if the specification parameters of the photoelectric conversion module 110 (such as optical wavelength) are not correctly set, causing the signal intensity of the optical signal Sopt to approach or fall below the receive sensitivity of the photoelectric conversion module 110, it may cause the indicator signal Slks to undergo transient changes, resulting in repeated enable/disable of the PoE function. The terminal equipment 20_1~20_n may then observe a state of repeated connections without the normal operation. Therefore, the determination mechanism of the third state signal St3 newly added in this exemplary embodiment may further avoid this problem, enabling determination accuracy to be further improved.

Those having ordinary knowledge in the technical field to which the application belongs, after considering the description of the above embodiments, should understand that the scope disclosed by the application also includes the main controller 140 performing the PoE function enable determination based on at least two of the above-mentioned first to third state signals St1~St3, which may all bring effects of improving determination accuracy and avoiding power waste.

In other words, the main controller 140 may also be based on the first state signal St1 (indicating whether the optical signal Sopt is lost) and the third state signal St3 (indicating whether the optical signal intensity exceeds the receive sensitivity of the photoelectric conversion module 110), or based on the second state signal St2 (indicating whether the signal conversion module 120 and the photoelectric conversion module 110 successfully establish the connection) and the third state signal, as a basis for determining whether to output an enabled PoE control signal, the application is not limited thereto.

Additionally, it should be noted that although the above embodiment description is conducted using the media converter as an example, the application is not limited thereto, therefore the components included in the device 100 will vary according to type and do not necessarily include all the above-mentioned components in hardware. For example, if the device 100 is a PoE switch, the photoelectric conversion module 110 may be an independent SFP module. That is, the device 100 at this time may be considered as not including the photoelectric conversion module 110, but only including the signal conversion module 120, the PoE control module 130, and the main controller 140. This is stated in advance.

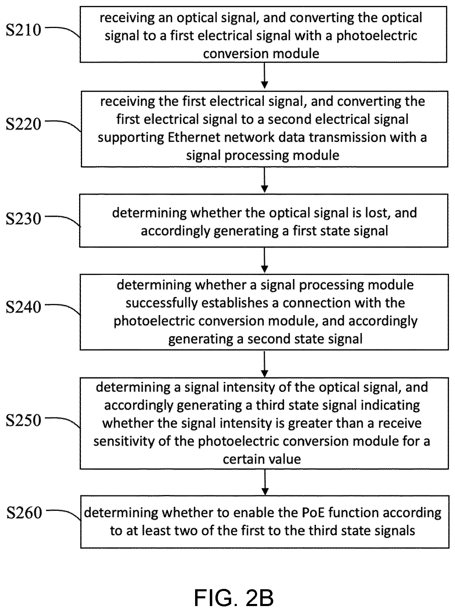

Below with FIG. 2A and FIG. 2B to explain the procedure of the power supply control method for the device with the PoE function, wherein FIG. 2A and FIG. 2B are flowcharts of a power supply control method for a device with a PoE function according to different embodiments of the application.

Referring to FIG. 1 and FIG. 2A together, the steps of the power supply control method of the present embodiment include: receiving the optical signal Sopt, and converting optical signal Sopt to first electrical signal Se with the photoelectric conversion module 110 (step S110); receiving the first electrical signal Se, and converting the first electrical signal Se to the second electrical signal Spd_1~Spd_n supporting Ethernet network data transmission with the signal processing module 120 (step S120); determining the connection status of the optical signal Sopt, and accordingly generating the first state signal St1/St2 indicating the connection status (step S130); determining the signal intensity of the optical signal Sopt, and accordingly generating the second state signal St3 indicating whether the signal intensity is greater than the receive sensitivity of the photoelectric conversion module 110 for a certain value (step S140); and determining whether to enable the PoE function according to the first state signal St1/St2 and the second state signal St3 (step S150), wherein when the PoE function is enabled, the DC power supply Pdc is generated and applied to the second electrical signal Spd_1~Spd_n.

In step S130, the first state signal may refer to the indicator signal Slos for indicating whether the optical signal Sopt is lost or the indicator signal Slks for indicating whether the signal processing module 120 successfully establishes the connection with the photoelectric conversion module 110 in the above embodiment. In other words, the first state signal of the present embodiment may be one of first state signal St1 and second state signal St2 of the above embodiment.

On the other hand, in step S140, the second state signal of the present embodiment may be the third state signal St3 of the above embodiment available for indicating the signal intensity of the optical signal Sopt.

In step S150, the main controller 140 will only output the enabled PoE control signal Spc to enable the PoE function when the first state signal St1/St2 and the second state signal St3 are simultaneously enabled.

Referring to FIG. 1 and FIG. 2B together, the steps of the power supply control method of the present embodiment include: receiving the optical signal Sopt, and converting the optical signal Sopt to the first electrical signal Se with the photoelectric conversion module 110 (step S210); receiving the first electrical signal Se, and converting the first electrical signal Se to the second electrical signal Spd_1~Spd_n supporting Ethernet network data transmission with the signal processing module 120 (step S220); determining whether the optical signal Sopt is lost, and accordingly generating the first state signal (step S230); determining whether the signal processing module 120 successfully establishes the connection with the photoelectric conversion module 110, and accordingly generating the second state signal St2 (step S240); determining the signal intensity of the optical signal Sopt, and accordingly generating the third state signal St3 indicating whether the signal intensity is greater than the receive sensitivity of the photoelectric conversion module 110 for a certain value (step S250); and determining whether to enable the PoE function according to at least two of the first to the third state signals St1~St3 (step S260), wherein when the PoE function is enabled, the DC power supply Pdc is generated and applied to the second electrical signal Spd_1~Spd_n.

Compared to FIG. 2A embodiment, in the procedure of the present embodiment, the main controller 140 may use at least two of three states as determination criteria: whether the optical signal Sopt is lost, whether the signal processing module 120 and the photoelectric conversion module 110 successfully establish the connection, and whether the signal intensity of the optical signal Sopt is greater than the receive sensitivity of the photoelectric conversion module 110 for a certain value (for example, 1dBm). In some embodiments, in step S260, the enabled PoE control signal Spc may be outputted to enable the PoE function only when the first to the third state signals St1~St3 are all enabled.

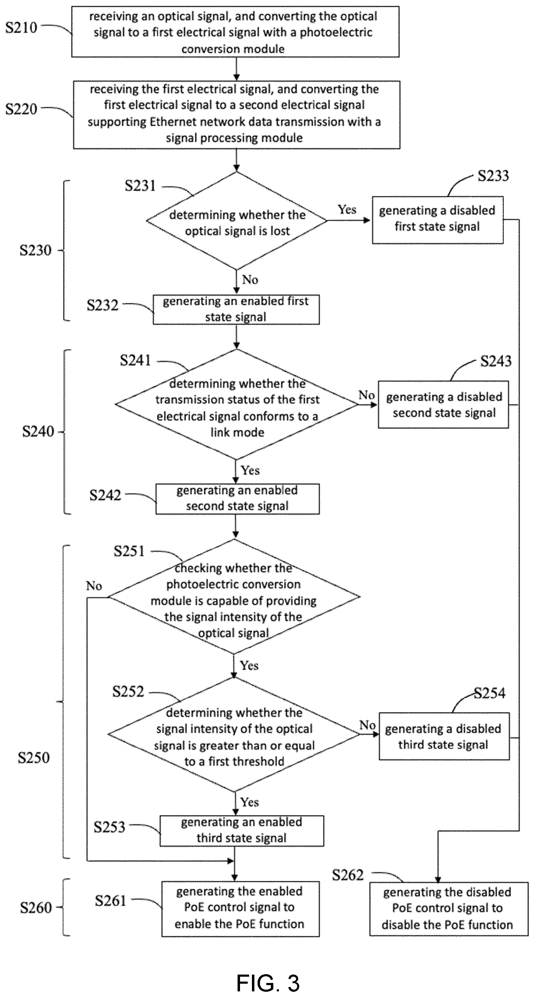

Below with FIG. 3 to further explain the specific procedure example of the above FIG. 2B, wherein FIG. 3 is a specific flowchart of a power supply control method according to some embodiments of FIG. 2B. Referring to FIG. 1 and FIG. 3 together, in step S230, the photoelectric conversion module 110 will determine whether the optical signal Sopt is lost (step S231); when the optical signal Sopt is determined as not lost, the photoelectric conversion module 110 will generate the enabled first state signal St1 (step S232); conversely, when the optical signal Sopt is determined as lost, the photoelectric conversion module 110 will generate the disabled first state signal St1 (step S233).

Next, in step S240, under the condition that the optical signal Sopt is determined as not lost, the signal processing module 120 will determine whether the transmission status of the first electrical signal Se conforms to a link mode (step S241); when the signal processing module 120 determines that the transmission status of the first electrical signal Se conforms to the link mode, it indicates that the signal processing module 120 and the photoelectric conversion module 110 successfully the establish connection, the signal processing module 120 will generate the enabled second state signal St2 (step S242); conversely, when the signal processing module 120 determines that the transmission status of the first electrical signal Se does not conform to the link mode, it indicates that the signal processing module 120 and the photoelectric conversion module 110 do not successfully establish the connection, the signal processing module 120 will generate the disabled second state signal St2 (step S243).

Next, in step S250, after determining that the signal processing module 120 and the photoelectric conversion module 110 successfully establish the connection, the main controller 140 will first check whether the photoelectric conversion module 110 is capable of providing the signal intensity of the optical signal Sopt (step S251). Under the condition that the photoelectric conversion module 110 is determined to provide the signal intensity information, the main controller 140 will further determine whether the signal intensity of the optical signal Sopt is greater than or equal to a first threshold (step S252), wherein the first threshold may, for example, be at least 1 dBm above the receive sensitivity of the photoelectric conversion module 110. If the signal intensity of the optical signal Sopt is greater than or equal to the first threshold, then the enabled third state signal St3 is generated (step S253); conversely, if the signal intensity of the optical signal Sopt is less than the first threshold, then the disabled third state signal St3 is generated (step S254). On the other hand, if the main controller 140 determines that the photoelectric conversion module 110 cannot provide the signal intensity information, then the main controller 140 will skip the determination of step S252, enabling the main controller 140 to directly proceed to step S260 based on the enabled first state signal St1 and the enabled second state signal St2.

In step S260, if the main controller 140 receives the enabled first to third state signals St1~St3, the main controller 140 will generate the enabled PoE control signal Spc to enable the PoE control module 130 to enable the PoE function (step S261). Conversely, if any one of the first to the third state signals St1~St3 received by the main controller 140 is disabled, then the main controller 140 will generate the disabled PoE control signal Spc to enable the PoE control module 130 to disable the PoE function (step S262).

For example, if the main controller 140 determines in step S251 that the photoelectric conversion module 110 support providing the signal intensity of the optical signal Sopt, and determines in step S252 that the signal intensity of the optical signal Sopt is greater than or equal to the first threshold, then the main controller 140 will receive the enabled first to third state signals St1~St3, and proceed to step S261 to enable the PoE function. Conversely, if the main controller 140 determines in step S251 that the photoelectric conversion module 110 does not support providing the signal intensity of the optical signal Sopt, then the main controller 140 will determine that the media controller 100 operates normally directly based on the first state signal St1 and the second state signal St2, and proceed to step S261 to enable the PoE function.

In some embodiments, during the operation of the device 100, after step S261/S262, the procedure of FIG. 3 may directly or repeat back to step S230 after a predetermined time, to repeatedly perform status determination to decide whether to enable/disable the PoE function.

In addition, it should be noted here that although the procedure shown in the embodiment of FIG. 3 sequentially performs determination to sequentially generate the corresponding first to third state signals St1~St3, the application is not limited thereto. In some embodiments, the determinations of steps S231, S241, and S251 in the above embodiments may also be performed partially or entirely simultaneously, or the order of execution may be adjusted.

The application is not limited to the above embodiments, and various modifications may be made within the scope shown in the claims. Embodiments obtained by appropriately combining technical means disclosed separately in different embodiments are also included within the technical scope of the application. Furthermore, by combining technical means disclosed separately in each embodiment, new technical features may be formed.

Additionally, it should be noted that any numerical values mentioned in the application are not intended to limit the present invention to be implemented only at the specified numerical values. Those having ordinary knowledge in the art can understand that each numerical value/composition ratio has allowable errors. As long as the results/functions to be achieved by each experimental example are not significantly affected, any values approximate to the disclosed numerical ranges are considered to belong to the scope disclosed by the present invention.

## Claims

1. A device (100) with a Power over Ethernet (PoE) function, adapted to convert a first electrical signal (Se) related to an optical signal (Sopt) into a second electrical signal (Spd_1, Spd_2, ...,Spd_n) supporting Ethernet data transmission, and provide the second electrical signal (Spd_1, Spd_2, ...,Spd_n) to a corresponding terminal equipment (20_1, 20_2, ...,20_n) through at least one Ethernet port (Rp_1, Rp_2, ...,Rp_n), the device (100) comprising:
a signal processing module (120), configured to receive the first electrical signal, and convert the first electrical signal (Se) into the second electrical signal (Spd_1, Spd_2, ...,Spd_n);
a PoE control module (130), configured to determine whether to enable the PoE function according to a PoE control signal (Spc), wherein when the PoE control module (130) receives an enabled PoE control signal (Spc), the PoE control module (130) enables the PoE function, and generates a DC power supply (Pdc) applied to the second electrical signal (Spd_1, Spd_2, ...,Spd_n), so that the second electrical signal (Spd_1, Spd_2, ...,Spd_n) with the DC power supply (Pdc) is provided to the corresponding Ethernet port (Rp_1, Rp_2, ...,Rp_n), and when the PoE control module (130) receives a disabled PoE control signal (Spc), the PoE control module (130) disables the PoE function, and stops generating the DC power supply (Pdc); and
a main controller (140), electrically connected to the signal processing module (120) and the PoE control module (130), and configured to output the corresponding PoE control signal (Spc) to control an operation of the PoE control module (130) according to a first state signal (St1) indicating a connection status of the optical signal (Sopt) and a second state signal (St2) indicating a signal intensity of the optical signal (Sopt),
wherein when the first state signal (St1) and the second state signal (St2) received by the main controller (140) are both enabled, the main controller (140) generates the enabled PoE control signal (Spc) to enable the PoE function.

2. The device (100) with the PoE function as claimed in claim 1, further comprising:
a photoelectric conversion module (110), electrically connected to the signal processing module (120) and the main controller (140), and configured to receive the optical signal (Sopt), and convert the optical signal (Sopt) into the first electrical signal.

3. The device (100) with the PoE function as claimed in claim 2, wherein the main controller (140) determines whether the signal intensity of the optical signal (Sopt) is greater than or equal to a first threshold according to the first electrical signal; when the signal intensity is greater than or equal to the first threshold, the second state signal (St2) is enabled, and when the signal intensity is less than the first threshold, the second state signal (St2) is disabled, wherein the first threshold is higher than a receive sensitivity of the photoelectric conversion module (110) by at least 1 dBm.

4. The device (100) with the PoE function as claimed in claim 3, wherein the photoelectric conversion module (110) generates a first indicator signal according to whether the optical signal (Sopt) is lost; and the signal processing module (120) determines whether to successfully establish a connection with the photoelectric conversion module (110), and generates a second indicator signal accordingly, wherein the main controller (140) uses one of the first indicator signal and the second indicator signal as the first state signal (St1).

5. The device (100) with the PoE function as claimed in claim 4, wherein the main controller (140) further determines a disable/enable status of the PoE control signal (Spc) according to a third state signal (St3); and the main controller (140) uses the other one of the first indicator signal and the second indicator signal as the third state signal (St3).

6. The device (100) with the PoE function as claimed in claim 5, wherein when any one of the first to the third state signals (St1, St2, St3) is disabled, the main controller (140) generates the disabled PoE control signal (Spc) to disable the PoE function.

7. A device (100) with a Power over Ethernet (PoE) function, comprising:
a photoelectric conversion module (110), configured to receive an optical signal (Sopt), and convert the optical signal (Sopt) into a first electrical signal, wherein the photoelectric conversion module (110) generates a first state signal (St1) according to whether the optical signal (Sopt) is lost;
a signal processing module (120), electrically connected to the photoelectric conversion module (110), and configured to receive the first electrical signal, and convert the first electrical signal (Se) into a second electrical signal (Spd_1, Spd_2, ...,Spd_n) supporting an Ethernet data transmission, wherein the signal processing module (120) determines whether to successfully establish a connection with the photoelectric conversion module (110), and generates a second state signal (St2) accordingly;
a PoE control module (130), configured to determine whether to enable the PoE function according to a PoE control signal (Spc), wherein when the PoE control module (130) receives an enabled PoE control signal (Spc), the PoE function is enabled, and a DC power supply (Pdc) is generated and applied to the second electrical signal (Spd_1, Spd_2, ...,Spd_n), so that the second electrical signal (Spd_1, Spd_2, ...,Spd_n) with the DC power supply (Pdc) is provided to a corresponding Ethernet port (Rp_1, Rp_2, ...,Rp_n), and when the PoE control module (130) receives a disabled PoE control signal (Spc), the PoE function is disabled, and the PoE control module (130) stops generating the DC power supply (Pdc); and
a main controller (140), electrically connected to the photoelectric conversion module (110), signal processing module (120) and the PoE control module (130), and configured to output a corresponding PoE control signal (Spc) according to the first state signal (St1) and the second state signal (St2) to control an operation of the PoE control module (130) according to a first state signal indicating a connection status of the optical signal (Sopt) and a second state signal (St2) indicating a signal intensity of the optical signal (Sopt),
wherein when any one of the first state signal (St1) and the second state signal (St2) received by the main controller (140) is disabled, the main controller (140) generates a disabled PoE control signal (Spc) to disable the PoE function.

8. The device (100) with the PoE function as claimed in claim 7, wherein the main controller (140) further determines a disable/enable status of the PoE control signal (Spc) according to a third state signal (St3) indicating a signal intensity of the optical signal (Sopt); the main controller (140) determines whether the signal intensity of the optical signal (Sopt) is greater than or equal to a first threshold according to the first electrical signal; when the signal intensity is greater than or equal to the first threshold, the third state signal (St3) is enabled, and when the signal intensity is less than the first threshold, the third state signal (St3) is disabled; wherein when any one of the first to the third state signals (St1, St2, St3) received by the main controller (140) is disabled, the main controller (140) generates a disabled PoE control signal (Spc) to disable the PoE function.

9. The device (100) with the PoE function as claimed in claim 8, wherein the first threshold is higher than a receive sensitivity of the photoelectric conversion module (110) by at least 1 dBm.

10. A power supply control method for a device (100) with a Power over Ethernet (PoE) function, the power supply control method comprising:
receiving an optical signal (Sopt), and converting the optical signal (Sopt) into a first electrical signal (Se) with a photoelectric conversion module (110);
receiving the first electrical signal, and converting the first electrical signal (Se) into a second electrical signal (Spd_1, Spd_2, ...,Spd_n) supporting an Ethernet data transmission with a signal processing module (120);
determining whether the optical signal (Sopt) is lost, and generating a first state signal (St1) accordingly;
determining whether the signal processing module (120) successfully establishes a connection with the photoelectric conversion module (110), and generating a second state signal (St2) accordingly;
determining whether a difference between a signal intensity of the optical signal (Sopt) and a receive sensitivity of the photoelectric conversion module (110) is greater than or equal to 1 dBm, and generating a third state signal (St3) accordingly; and
determining whether to enable a PoE function according to the first to the third state signals (St1, St2, St3), wherein when the PoE function is enabled, a DC power supply (Pdc) is generated and applied to the second electrical signal (Spd_1, Spd_2, ...,Spd_n).
